# EUROPÄISCHE PATENTANMELDUNG

(11) **EP 1 580 076 A1**
(43) Veröffentlichungstag der Anmeldung: **28.09.2005**
(21) Anmeldenummer: 04007225.8
(22) Anmeldetag: 25.03.2004
(51) Int. Cl.: B60R 1/02, B60Q 1/072, B60Q 1/115

(54) **Einstellvorrichtung für Spiegel und Frontscheinwerfer eines Kraftfahrzeugs**

(71) Anmelder: Delphi Technologies, Inc., Troy Michigan 48007 (US)
(72) Erfinder: Denkelmann, Rainer, Dr., 44625 Herne (DE)
(74) Vertreter: Manitz, Finsterwald & Partner GbR

(57) **Zusammenfassung**

Eine Einstellvorrichtung für ein Kraftfahrzeug weist zumindest einen elektrisch verstellbaren Spiegel und Frontscheinwerfer mit einer elektrischen Leuchtweiteneinstellung auf, wobei der Spiegel des Fahrzeugs mit der Leuchtweiteneinstellung über die Einstellvorrichtung elektrisch derart gekoppelt ist, dass bei Betätigung der Leuchtweiteneinstellung automatisch die Position des Spiegels geändert wird.

## Beschreibung

Die vorliegende Erfindung betrifft eine Einstellvorrichtung für ein Kraftfahrzeug, welches zumindest einen elektrisch verstellbaren Spiegel und Frontscheinwerfer mit einer elektrischen Leuchtweiteneinstellung aufweist.

Viele Fahrzeuge besitzen heutzutage eine manuelle oder automatische Leuchtweiteneinstellung und elektrisch verstellbare Spiegel. Für Fahrzeuge mit HID (High Intensity Discharge) - Frontscheinwerfern ist eine automatische Leuchtweiteneinstellung gesetzlich vorgeschrieben, welche die Leuchtweite der Frontscheinwerfer in Abhängigkeit vom Beladungszustand des Fahrzeugs automatisch so einstellt, dass der entgegenkommende Verkehr nicht geblendet wird. Bei Fahrzeugen mit manueller Leuchtweiteneinstellung muss diese Einstellung bei einer Änderung des Beladungszustands vom Fahrer manuell vorgenommen werden. Ebenso müssen bei verändertem Beladungszustand des Fahrzeuges wegen der daraus resultierenden veränderten Lage des Fahrzeugs die Positionen der Spiegel an die Fahrzeuglage angepasst werden. In vielen Fällen wird dies aber von dem Fahrer vergessen oder zumindest als lästig empfunden.

Es ist Aufgabe der vorliegenden Erfindung, eine Vorrichtung zur Verfügung zu stellen, welche unter Verwendung von in einem Fahrzeug vorhandenen Mitteln die Verkehrssicherheit und den Bedienkomfort erhöht.

Diese Aufgabe wird durch eine Einstellvorrichtung mit den Merkmalen des Anspruchs 1 gelöst.

Die erfindungsgemäße Einstellvorrichtung ist zur Verwendung in einem Kraftfahrzeug vorgesehen, welches zumindest einen elektrisch verstellbaren Spiegel und Frontscheinwerfer mit einer elektrischen Leuchtweiteneinstellung aufweist. Der Spiegel des Fahrzeugs ist mit der Leuchtweiteneinstellung über die erfindungsgemäße Einstellvorrichtung elektrisch derart gekoppelt, dass bei Betätigung der Leuchtweiteneinstellung automatisch die Position des Spiegels geändert wird.

Mit einer derartigen Einstellvorrichtung ist es nicht mehr möglich, dass der Fahrer nach dem Beladen des Fahrzeugs vergisst, die Spiegel dementsprechend an den neuen Beladungszustand anzupassen. Wenn der Fahrer die Leuchtweite manuell verändert oder wenn diese von einer automatischen Leuchtweiteneinstellung an einen veränderten Beladungszustand angepasst wird, wird die Position der Spiegel dementsprechend angepasst.

Vorteilhafte Ausführungsformen der Erfindung sind in der Beschreibung, den Figuren sowie den Unteransprüchen beschrieben.

Die Einstellvorrichtung kann eine manuelle oder eine automatische Leuchtweiteneinstellung aufweisen. Bei einer automatischen Leuchtweiteneinstellung wird die Leuchtweite automatisch an einen über einen Sensor detektierten veränderten Beladungszustand angepasst. Über die Einstellvorrichtung wird die Position des Spiegels dann ebenfalls an diesen veränderten Beladungszustand angepasst.

Bei dem Spiegel, dessen Position über die Einstellvorrichtung an einen veränderten Beladungszustand angepasst wird, kann es sich sowohl um elektrisch verstellbare Außenspiegel, als auch um einen elektrisch verstellbaren Innenspiegel handeln. Selbstverständlich kann auch die Position mehrerer Spiegel, beispielsweise eines Innenspiegels und zweier Außenspiegel, über die Einstellvorrichtung angepasst werden.

Moderne Kraftfahrzeuge können eine Identifikationseinrichtung auf weisen, bei der der jeweilige Fahrer beispielsweise mit Hilfe eines persönlichen Schlüssels identifiziert wird, und zu dem jeweiligen Fahrer gehörende Einstellungen wie z.B. die Sitzposition gespeichert und automatisch eingestellt werden können. Eine solche Identifikationseinrichtung kann ebenfalls mit der erfindungsgemäßen Einstellvorrichtung kombiniert werden.

Nach einer weiteren Ausführungsform der Erfindung kann zusätzlich ein Datenspeicher vorgesehen sein, in dem für verschiedene Fahrer jeweils Standardeinstellungen der Position des Spiegels gespeichert werden können. Zudem können Mittel zum Identifizieren eines Fahrers vorgesehen sein, und eine zu einem Fahrer gehörende Standardeinstellung der Position des Spiegels kann als zusätzliche Steuergröße für die Einstellvorrichtung vorgesehen sein. Der Fahrer kann beispielsweise mit Hilfe eines persönlichen Schlüssels, einer Chipkarte oder über biometrische Daten identifiziert werden. In dem Datenspeicher können dann für verschiedene Fahrer jeweils Standardeinstellungen der Position des Spiegels bei normal beladenem Fahrzeug gespeichert werden. Falls die Einstellvorrichtung eine automatische Leuchtweiteneinstellung aufweist, welche die Leuchtweite automatisch an den veränderten Beladungszustand anpasst, kann über die erfindungsgemäße Einstellvorrichtung die Position der Spiegel nun an den Beladungszustand angepasst werden, wobei die Standardeinstellung des Spiegels, welche zum jeweiligen Fahrer gehört, zusätzlich berücksichtigt wird.

Die Erfindung betrifft ebenfalls ein Verfahren zum Anpassen der Position eines Spiegels an einen veränderten Beladungszustand für ein Kraftfahrzeug mit Frontscheinwerfern mit einer elektrischen Leuchtweiteneinstellung. Das Verfahren umfasst die Verfahrensschritte, dass zunächst eine Veränderung der Leuchtweite detektiert wird, und im Anschluss die Position des Spiegels an den veränderten Beladungszustand angepasst wird, wobei der detektierte Wert verwendet wird.

Nach einer bevorzugten Ausführungsform der Erfindung kann bei dem oben genannten Verfahren der Fahrer zunächst mittels einer Identifikationseinrichtung identifiziert werden und eine zu diesem Fahrer gehörende gespeicherte Standardeinstellung der Position des Spiegels kann dann zusätzlich zum Anpassen der Position des Spiegels an den veränderten Beladungszustand als Steuersignal verwendet werden. Ein manuelles Einstellen der Spiegel ist somit überflüssig, da die Spiegel automatisch sowohl an den jeweiligen Beladungszustand als auch an den jeweiligen Fahrer angepasst werden.

Nachfolgend wird die vorliegende Erfindung rein beispielhaft anhand vorteilhafter Ausführungsformen und unter Bezugnahme auf die beigefügte Zeichnung beschrieben.

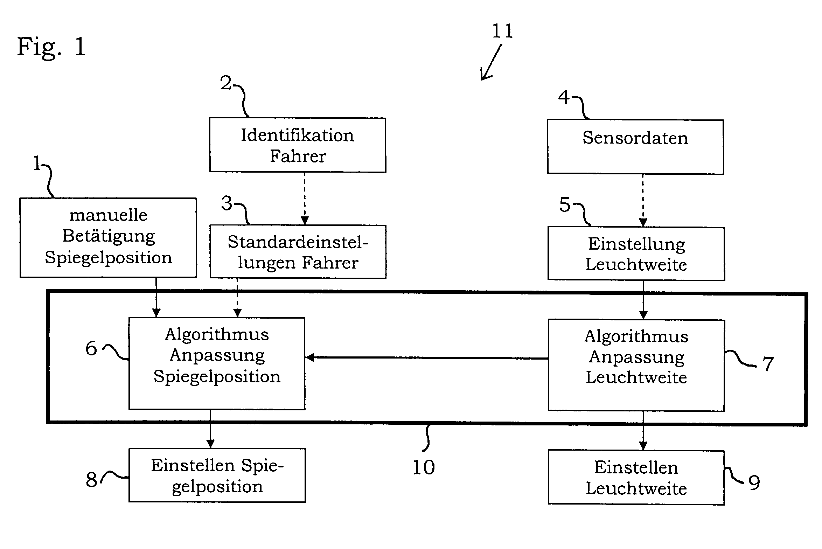

Fig. 1 zeigt ein schematisches Ablaufdiagramm des erfindungsgemäßen Verfahrens.

Die Erfindung ist auf die Verwendung in einem Kraftfahrzeug gerichtet, welches zumindest einen elektrisch verstellbaren Spiegel (vgl. Block 8) und Frontscheinwerfer mit einer elektrischen Leuchtweiteneinstellung (vgl. Block 5) aufweist.

Eine erfindungsgemäße Einstellvorrichtung 11 bildet das Bindeglied zwischen der Leuchtweiteneinstellung 5 und dem elektrisch verstellbaren Spiegel des Fahrzeugs.

Die Leuchtweiteneinstellung 5 kann vom Fahrer manuell vorgenommen werden, alternativ kann die Einstellvorrichtung 11 eine automatische Leuchtweiteneinstellung aufweisen, bei der die Leuchtweite in Abhängigkeit vom Beladungszustand des Fahrzeugs selbsttätig eingestellt wird.

Im ersten Fall der manuellen Leuchtweiteneinstellung 5 wird eine Änderung der Leuchtweite, welche der Fahrer vorgenommen hat, von der Einstellvorrichtung 11 an eine elektronischen Einheit 10 übermittelt und es wird dann berechnet, wie die Position des Spiegels zur Anpassung an den veränderten Beladungszustand des Fahrzeugs verändert werden muss. Als Eingangswert für diese Berechnung dient der Winkel, um den die Leuchtweite verändert wurde. Ein möglicher Algorithmus 6 sieht vor, dass der Spiegel um den gleichen Winkel verstellt wird wie die Leuchtweite (Block 8). Dies führt dann zu einem korrekten Ergebnis, wenn die Position des Spiegels vor dem Verändern der Leuchtweite der korrekten Spiegelposition für den vorherigen Beladungszustand und den jeweiligen Fahrer entspricht. Dies ist insbesondere dann nicht immer der Fall, wenn der Fahrer des Fahrzeugs gewechselt hat.

Im zweiten Fall, falls die Einstellvorrichtung 11 eine automatische Leuchtweiteneinstellung aufweist, werden Sensordaten 4 von einem Positionssensor an die Leuchtweiteneinstellung 5 übermittelt und die Leuchtweite wird automatisch so an den Beladungszustand des Fahrzeugs angepasst, dass entgegenkommende Fahrzeuge nicht geblendet werden. Über den Algorithmus 6 wird dann genau wie im Fall einer manuellen Leuchtweiteneinstellung berechnet, um welchen Wert die Spiegelposition verändert werden muss, und die Spiegelposition wird dementsprechend eingestellt (Block 8).

Falls die Einstellvorrichtung 11 zusätzlich eine Identifikationseinrichtung 2 aufweist, welche es ermöglicht, Standardeinstellungen 3 für die Position des Spiegels für verschiedene Fahrer zu speichern, so kann auch nach einem Fahrerwechsel die Position des Spiegels mit Hilfe der erfindungsgemäßen Einstellvorrichtung 11 an einen veränderten Beladungszustand angepasst werden. Wenn der Fahrer von der Identifikationseinrichtung 2 identifiziert worden ist, können die Standardeinstellungen 3, die zu dem jeweiligen Fahrer gehören, als zusätzlicher Eingangswert zur Berechnung der angepassten Spiegelposition über den dafür vorgesehenen Algorithmus 6 verwendet werden.

### Bezugszeichenliste

- 1: manuelle Betätigung Spiegelposition
- 2: Identifikation Fahrer
- 3: Standardeinstellungen Fahrer
- 4: Sensordaten
- 5: Einstellung Leuchtweite
- 6: Algorithmus Anpassung Spiegelposition
- 7: Algorithmus Anpassung Leuchtweite
- 8: Einstellen Spiegelposition
- 9: Einstellen Leuchtweite
- 10: elektronische Einheit
- 11: Einstellvorrichtung

## Patentansprüche

1. Einstellvorrichtung für ein Kraftfahrzeug, welches zumindest einen elektrisch verstellbaren Spiegel und Frontscheinwerfer mit einer elektrischen Leuchtweiteneinstellung aufweist, wobei der Spiegel des Fahrzeugs mit der Leuchtweiteneinstellung über die Einstellvorrichtung elektrisch derart gekoppelt ist, dass bei Betätigung der Leuchtweiteneinstellung automatisch die Position des Spiegels geändert wird.

2. Einstellvorrichtung nach Anspruch 1 für ein Kraftfahrzeug, welches einen elektrisch verstellbaren Innenspiegel, zumindest einen elektrisch verstellbaren Außenspiegel und Frontscheinwerfer mit einer elektrischen Leuchtweiteneinstellung aufweist, wobei der Innenspiegel und der Außenspiegel des Fahrzeugs mit der Leuchtweiteneinstellung über die Einstellvorrichtung elektrisch derart gekoppelt sind, dass bei Betätigung der Leuchtweiteneinstellung automatisch die Position der Spiegel geändert wird.

3. Einstellvorrichtung nach Anspruch 1 oder 2, umfassend eine manuelle Leuchtweiteneinstellung.

4. Einstellvorrichtung nach Anspruch 1 oder 2 mit einer Leuchtweiteneinstellung, die in Abhängigkeit von dem Beladungszustand des Fahrzeugs die Leuchtweite automatisch an den veränderten Beladungszustand anpasst.

5. Einstellvorrichtung nach einem der vorstehenden Ansprüche,
**dadurch gekennzeichnet ,**
**dass** ein Datenspeicher vorgesehen ist, in dem für verschiedene Fahrer jeweils Standardeinstellungen der Position des Spiegels speicherbar sind,
**dass** Mittel zum Identifizieren eines Fahrers vorgesehen sind, und
**dass** eine zu einem Fahrer gehörende Standardeinstellung als zusätzliche Steuergröße für die Einstellvorrichtung vorgesehen ist.

6. Verfahren zum Anpassen der Position eines Spiegels an einen veränderten Beladungszustand für ein Kraftfahrzeug mit Frontscheinwerfern mit einer elektrischen Leuchtweiteneinstellung,
umfassend folgende Schritte:
Detektieren einer Veränderung der Leuchtweite,
Anpassen der Position des Spiegels an den veränderten Beladungszustand unter Verwendung des detektierten Wertes.

7. Verfahren nach Anspruch 6,
**dadurch gekennzeichnet,**
**dass** die Position eines Innenspiegels und eines Außenspiegels an den veränderten Beladungszustand angepasst wird.

8. Verfahren nach Anspruch 6 oder 7,
**dadurch gekennzeichnet,**
**dass** ein Fahrer mittels einer Identifikationseinrichtung identifiziert wird und eine zu diesem Fahrer gehörende gespeicherte Standardeinstellung der Position des Spiegels zusätzlich zum Anpassen der Position des Spiegels verwendet wird.
